Europäisches Patentamt

European Patent Office

Office européen des brevets

(11) Publication number: **0 060 720**
A1

## (12) EUROPEAN PATENT APPLICATION

(21) Application number: **82301338.8**

(22) Date of filing: **16.03.82**

(51) Int. Cl.³: **B 65 B 43/42**, B 65 G 17/42

(30) Priority: **17.03.81 AU 8027/81**

(43) Date of publication of application: **22.09.82**
**Bulletin 82/38**

(84) Designated Contracting States: **CH DE FR GB IT LI NL**

(71) Applicant: **Hoehn, John Walter, 7 Webb Street, Middle Brighton, Victoria (AU)**

(72) Inventor: **Hoehn, John Walter, 7 Webb Street, Middle Brighton, Victoria (AU)**

(74) Representative: **Livsey, Gilbert Charlesworth Norris et al, HYDE, HEIDE & O'DONNELL 2 Serjeants' Inn, London EC4Y 1LL (GB)**

(54) Improvements relating to conveyors.

(57) A conveyor system capable of adjustment to allow articles of different sizes to be carried thereby, the conveyor system comprising two endless flexible members (20, 21) carrying a plurality of pairs of article supporting members (24, 25) whereby respective article supporting members of each pair are connected to a different one of the endless flexible members (20, 21), and means for varying the longitudinal spacing between the supporting members (24, 25) including connectors (30, 31) and/or means (10, 11) for varying the phase of the respective endless flexible members (20, 21).

- 1 -

"IMPROVEMENTS RELATING TO CONVEYORS"

This invention relates to a conveyor which may be adjusted to convey objects of different sizes, such as containers.

There are many applications in industry where a conveyor system is required to handle different sized objects at different times and where the objects cannot be randomly placed on the conveyor. One prime example of such a conveyor is that used to feed containers through washing equipment and/or to filling or capping equipment. It is common for such equipment to be used to wash, fill, or cap different size containers when different commodities are being placed in the containers and also to have different size containers for receiving different quantities of the same commodity. In many applications it is necessary for the spacing of the containers on the conveyor to be accurately controlled so that they will register correctly with various stations in the associated equipment, such as for the purposes of filling the container or apply a closure thereto. It is therefore desirable that the conveyor system can be readily adjusted to receive and accurately locate objects such as containers of different sizes and that such adjustment can be effected quickly and simply.

It is therefore the object of the present invention to provide a conveyor adjustable to accommodate objects of different sizes which is effective in operation and can be quickly and accurately adjusted as required.

With this object in view there is provided a conveyor adjustable to transport objects of different sizes comprising two endless flexible members supported so at least one flight of each flexible member move on parallel laterally spaced paths, a plurality of pairs of object support members, each said support member of each said pair being connected to one of the endless flexible members so as to define respective object receiving spaces therebetween, and means to selectively adjust the relative longitudinal spacing between the object support members of each said pair to accommodate different sized objects in said object receiving areas.

Preferably the support members of each said pair are respectively connected to a different one of said endless flexible members and the means to adjust the relative longitudinal spacing of the object support members comprises means to vary the phasing of the respective flights of the flexible members along said parallel spaced paths. This arrangement enables the space between the support members of each pair to be varied in the direction of movement along the paths without the inconvenience of varying the position of every one of the support members. Conveniently there are provided two co-axial idler pulleys or sprockets and two co-axial drive pulleys or sprockets with the axes of the idler and drive pulleys parallel and laterally spaced. Each endless flexible member is supported on one idler and one drive pulley or sprocket so that one flight of each flexible member moves along the said parallel laterally spaced paths. The two drive pulleys or sprockets are coupled to a common drive shaft so as to rotate in unison and the mounting of one of the drive pulleys or sprockets on the shaft is such that it may be angularly spaced about the axis of the drive shaft relative to the other drive pulley or sprocket. Accordingly by adjusting the angular relationship between the two drive pulleys or sprockets, the phasing of the movement of the two flexible members along the respective paths can be adjusted and hence the spacing between the respective support members of each pair can be varied to receive different sized objects.

Conveniently the object support members of each pair carry co-operating guide elements so that during the adjustment of the spacing therebetween the members undergo a substantially pure linear movement relative to one another. The guide elements may be in the form of a pin carried by one of the members slidably received in an aperture in the other member.

Stationary guide rails may be provided adjacent each of the two opposite sides of the path of the endless flexible members to prevent displacement in the lateral direction of objects located on the conveyor. The spacing of these stationary guide members relative to the flexible endless members may be adjustable to accommodate objects of different lateral dimensions. This adjustment is independent of the adjustment of the spacing between the respective members of each pair of object support members.

The conveyor may be used so that the objects are carried thereby along two flights, one spaced vertically from the other so that the objects are inverted as they move from one flight to the other. Associated with the lower of these two flights is a further guide bar spaced below the flexible members so as to engage the lower part of the objects and retain them in co-operation with the conveyor and respective object support members as they travel along the lower flight of the conveyor. Again the position of this lower guide relative to the level of the lower flight of the conveyor can be adjusted to accommodate objects of different height. It will be appreciated that this guide member will also extend around substantially the lower half of the curved part of the conveyor travel as it moves between the upper and lower flights so as to again retain the objects in position on the conveyor as they are moved into and out of the inverted position.

The invention will now be described with reference to a preferred embodiment applied to a conveyor for use in transporting containers having one open end, and passing the containers through cleaning means. Particular features of the conveyor are illustrated in the accompanying drawings. In the drawings:

Figure 1 is a perspective view partially sectional showing a pair of object support members secured to two parallel chains; and

Figure 2 is a perspective view of a pair of sprocket wheels engaging the two parallel chains of Figure 1.

The conveyor system according to the present preferred embodiment in general comprises a base frame having journalled thereon a pair of co-axial idler sprockets and a pair of co-axial drive sprockets. The respective pairs being mounted with their axes horizontally spaced and parallel. The two idler sprockets are free to rotate independently to one another on their common axis and the two driven sprockets are coupled together to be driven in unison through a common drive mechanism from an electric motor. Two endless chains are mounted on respective drive and idler sprockets so as to operate in laterally spaced vertical planes with upper and lower parallel horizontal flights.

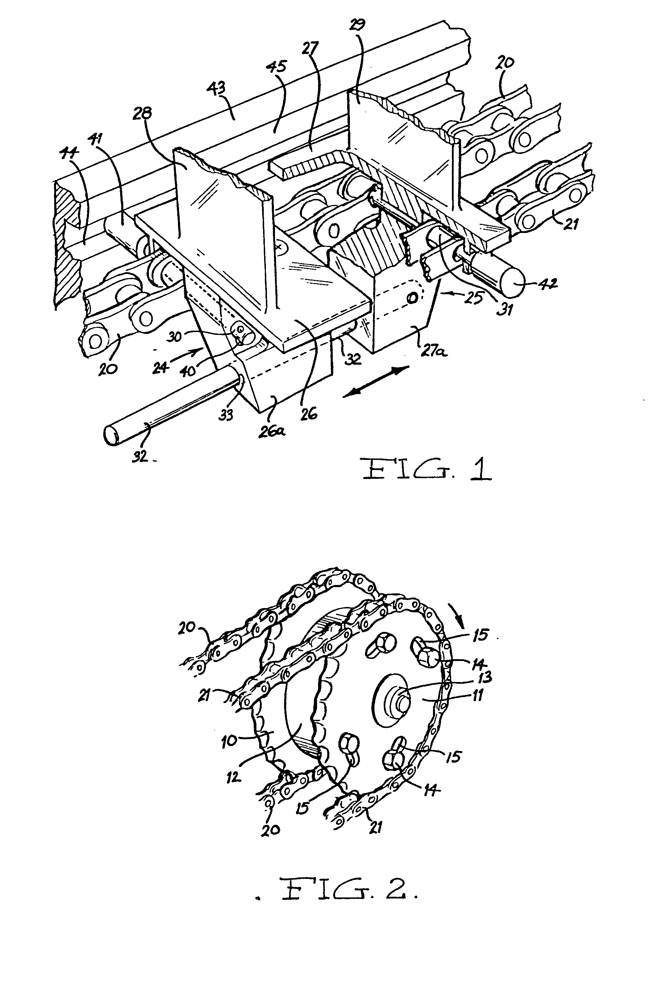

The aforementioned general arrangement is not illustrated completely in Figures 1 and 2, however, certain features are shown in the drawings. Figure 2 shows a pair of drive sprockets 10,11 coupled to a common drive shaft 13 through a flanged boss 12 keyed to the drive shaft 13. One sprocket 10 is secured in a fixed relation to the flange of the boss 12 and the other sprocket 11 is adjustably mounted to the flange so that it may be rotated about the axis of the shaft 13 relative to the flange and hence relative to the other sprocket 10. This adjustment is controlled by a plurality of bolts 14 extending through arcuate slots 15 in the adjustable sprocket 11 and threadably engaged in holes in the flange of the boss 12. Accordingly by slackening the bolts 14 this permits the sprocket 11 to be rotated on the boss within the limits of the length of the arcuate slots 15 and may be locked in any position within that limit by tightening of the bolts 14. It will be appreciated that this arrangement provides a continuous rather than discrete adjustment and the amount of adjustment can be varied by varying the length of the arcuate slots 15.

It will thus be appreciated that as the chains 20,21, are mounted on the respective sprockets 10,11, adjustment of the angular relationship of the sprocket 11 relative to the sprocket 10 causes a displacement of chain 21 relative to chain 20 in the direction of the length thereof.

Figure 1 illustrates one pair of object support members 24,25 supported on the chains 20,21. It will be appreciated that a plurality of such pairs of object support members would normally be included in the conveyor system. Each member 24,25, of each pair comprises a base section 26,27, extending transversely of the two chains and an upright section 28,29, extending from the base section outwardly from the chains. The two base sections 26,27, of the pair of members forms a base support upon which the object to be carried may rest, and the upright sections 28,29, engage the opposite sides of the object to retain it in position on the base sections as it is carried along by the chains 20,21.

On the underside of each base section 26,27, of each pair of members 24,25 there is provided a bracket 26a, 27a, which extend down between the two chains 20,21 with bracket 26a coupled by pin 30 to the chain 20, and the bracket 27a coupled by pin 31 to the other chain 21. The pins 30,31 each comprise an elongated shank which passes through bores in the respective chains pivot connections as well as a bore in the respective brackets 26a,27a. The pins 30,31 are maintained in position by split pins 40 or other similar fastener means and enlarged cylindrical head portions 41,42 respectively. Accordingly as the chains are driven in unison the two support members 24,25, of each pair will travel along the path of the chains in unison, however the spacing between the members 24,25, can be adjusted by adjustment of the angular relationship of the two drive sprockets 11,10, as previously described as the members 24,25 are secured only to a respective one of the chains 20,21.

In order to retain the two members 24,25, of each pair in a steady relationship and in particular to prevent relative angular movement therebetween as the chains pass around the curved periphery of the drive and idle sprockets, bracket 27a of each pair of members 24,25 has a pin 32 attached thereto extending generally parallel to the chains 20,21, the pin 32 being slidably received in an aperture 33 in the bracket 26a of the other member of the pair. Thus during adjustment of the spacing between the respective members of each pair of object support members, the apertured bracket 26a can slide along the pin 32. However during normal operation of the conveyor the two brackets are held in a fixed relationship by the pin 32, so that the upright sections 28,29, of each of the members remain in a fixed relationship, normally being parallel. The further advantage of this construction is that as each pair of members pass around the periphery of the drive or idle sprockets, the chain will travel along an arcuate pass, and so the two members 24,25 of each pair will move slightly closer together in the direction of the movement of the conveyor due to the difference between the length of the arc and the straight line distance across the sector, and thus the upright sections of the members of the pair will more closely grip the opposite sides of the container and thus retain it in position on the conveyor.

As is shown in Figure 1, a guide rail 43 is provided extending generally parallel to and laterally spaced from the chains 20,21. A second similar guide rail may conveniently be provided on the opposite side of the chains 20,21. The guide rail 43 has a longitudinally extending groove 44 arranged to engage the enlarged cylindrical head 41 of the pin 30. In this manner the support members 24,25 are required to travel in a predetermined path, that is, any possible sag that might occur in the chains 20,21 will not effect the path of travel of the support members 24,25. The conveyor system preferably includes means (not shown) for adjusting the position of further guide or support rails relative to the chains 20,21. This adjustment provides allowance for containers having varying lateral width sizes.

Preferably at least one adjustable support guide rail is provided beneath the lower flight of the conveyor chains 20,21 to maintain objects carried by the conveyor in engagement with the object support members. As the containers move along the lower flight of the conveyor they pass through the path of a number of jets which may issue either air or liquid into the open end of the container to wash the interior thereof. It will however be appreciated that this same conveyor may be used in a number of other applications where it is required to convey at different times, different sized objects.

C L A I M S

1.        A conveyor system adjustable to transport objects of different sizes comprising an endless conveyor means arranged to move through a predetermined path and a plurality of object support members carried by said endless conveyor means, said conveyor system being characterized in that said endless conveyor means includes two endless flexible members (20,21) supported so at least one flight of each flexible member move on parallel laterally spaced paths, said object support members being arranged in pairs (24,25) with each said object support member of each said pair being connected to one of the endless flexible members (20,21) and arranged to define respective object receiving spaces therebetween, and means (10,11, 30,31) to selectively adjust the relative longitudinal spacing of each said pair (24,25) to accommodate different sized objects in said object receiving spaces.

2.        A conveyor system according to claim 1 characterized in that the support members (24,25) of each said pair are respectively connected to a different one of said endless flexible members (20,21) and the means to adjust the relative longitudinal spacing of the object support members comprises means (10,11) to vary the phasing of the respective flights of the flexible members along said parallel spaced paths.

3.        A conveyor system according to claim 1 or claim 2 characterized in that said endless flexible members (20,21) are respectively supported on at least one pair of co-axial pulleys or sprockets (10,11), and the means to adjust the relative longitudinal spacing of the object support members comprises means (14,15) for selectively varying the relative angular positions of said pulleys or sprockets (10,11).

4.        A conveyor system according to anyone of claims 1 to 3 characterized in that each said pair of object support members (24,25) include co-operating guide means (32,33) whereby during adjustment of the spacing therebetween the support members undergo a substantially pure linear movement relative to one another.

5.       A conveyor system according to claim 4 characterized in that guide means (32,33) comprises a pin (32) carried by one of the object support members (25) of a said pair slidably received within a guide bore (33) in the other of the object support members (24) of the said pair.

6.       A conveyor system according to any one of claims 1 to 5 characterized in that at least one stationary guide rail (43) is provided on one side of the laterally spaced parallel paths of said flexible members (20,21).

7.       A conveyor system according to claim 6 characterized in that the or each said guide rail (43) includes means (44) adapted to co-operate with at least one of the object support members of each said pair (24,25) of object support members to ensure said pairs of object support members follow a predetermined path of travel.

8.       A conveyor system according to any one of claims 1 to 7 characterized in that the endless flexible members (20,21) comprise two flights, one spaced vertically from the other so that objects carried by the pairs of said object support members (24,25) are inverted as they move from one flight to the other, said conveyor including at least one support means positioned beneath the lower one of said flights to maintain objects carried by the conveyor in engagement with the object support members of each said pair of such members.

9.       A conveyor system according to claim 8 characterized in that the object support members (24,25) of each said pair are adapted to move towards each other as the support members move from one flight to the other whereby an object carried thereby is gripped by the said support members.

10.      A conveyor system according to claim 8 or claim 9 characterized in that the support means comprises at least one guide bar, the or each guide bar being adjustably positionable relative to said lower flight.

1/1

0060720

FIG. 1

FIG. 2.

## EUROPEAN SEARCH REPORT

European Patent Office

Application number

EP 82301338.8

### DOCUMENTS CONSIDERED TO BE RELEVANT

| Category | Citation of document with indication, where appropriate, of relevant passages | Relevant to claim |
|---|---|---|
| A | DE - B2 - 1 511 643 (HESSER) | 1 |

**CLASSIFICATION OF THE APPLICATION (Int. Cl. 3)**

B 65 B 43/42
B 65 G 17/42

**TECHNICAL FIELDS SEARCHED (Int.Cl. 3)**

B 65 G 17/00
B 65 G 19/00
B 65 B 35/00
B 65 B 7/00
B 65 B 43/00

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

X | The present search report has been drawn up for all claims

| Place of search | Date of completion of the search | Examiner |
|---|---|---|
| VIENNA | 15-06-1982 | PISSENBERGER |

EPO Form 1503.1  06.78